(19) **Europäisches Patentamt / European Patent Office / Office européen des brevets**

(11) **EP 4 535 246 A1**

(12) **EUROPEAN PATENT APPLICATION**
published in accordance with Art. 153(4) EPC

(43) Date of publication:
**09.04.2025 Bulletin 2025/15**

(21) Application number: **23815463.7**

(22) Date of filing: **20.01.2023**

(51) International Patent Classification (IPC):
***G06N 20/00*** (2019.01)

(52) Cooperative Patent Classification (CPC):
**G06N 20/00**

(86) International application number:
**PCT/JP2023/001789**

(87) International publication number:
**WO 2023/233699 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.06.2022 JP 2022090195**

(71) Applicant: **Hitachi, Ltd.**
**Tokyo 100-8280 (JP)**

(72) Inventors:
• **TARUMI Shinji**
**Tokyo 100-8280 (JP)**
• **SUZUKI Mayumi**
**Tokyo 100-8280 (JP)**

(74) Representative: **Mewburn Ellis LLP**
**Aurora Building**
**Counterslip**
**Bristol BS1 6BX (GB)**

(54) **FEDERATED LEARNING SYSTEM, FEDERATED LEARNING METHOD AND FEDERATED LEARNING PROGRAM**

(57)  A federated learning system includes a plurality of client terminals each having a learning data set and a server, and the learning data set includes a data sample including a client ID, a first explanatory variable, and a first objective variable. A calculation process is executed by the client terminal, and a first federated learning process is executed which repeats a first training process by the client terminal and a first integration process by the server. In the calculation process, the client terminal inputs the data sample to a similarity calculation model to calculate similarity between the data sample and a plurality of learning data sets, in the first training process, the client terminal trains an individual analysis model on the basis of a specific similarity with a specific learning data set, and in the first integration process, the server integrates first training results from the plurality of client terminals to generate first integration information regarding an integrated individual analysis model.

*FIG. 4*

FEDERATED LEARNING FL2 OF INDIVIDUAL ANALYSIS MODELS

**Description**

[Incorporation by Reference]

This application claims priority to Japanese Patent Application No. 2022-90195 filed on June 2, 2022, the contents of which are incorporated herein by reference.

Technical Field

The present invention relates to a federated learning system, a federated learning method, and a federated learning program that execute federated learning.

Background Art

With the progress of digitalization of healthcare information, secondary use of healthcare information managed by local governments, medical institutions, individuals, and the like (hereinafter, a client) is progressing. In particular, federated learning capable of training a model in a distributed environment without intensively managing information in a server has attracted attention from the viewpoint of personal information protection.

PTL 1 below discloses a concept of federated learning that designates a client in a method more suitable for application in a federated learning environment and measures similarity of training data. A device for federated learning disclosed in PTL 1 below receives parameterization updates related to predetermined parameterization of a neural network from a plurality of clients, and executes federated learning of the neural network according to similarity between the parameterization updates.

Citation List

Patent Literature

PTL 1: WO 2020/229684 A

Summary of Invention

Technical Problem

However, in PTL 1 described above, the similarity is determined on the basis of the parameter calculated from the client data, so that the similarity for each data sample of each client is not considered. Therefore, the device of PTL 1 determines adoption or non-adoption of data to be used for integrated learning on a per-client basis, cannot determine adoption or non-adoption on a per-data-sample basis for each client, and thus cannot control the magnitude of the influence on integrated learning on a per-data-sample basis for each client.

An object of the present invention is to provide a model suitable for each client terminal participating in federated learning.

Solution to Problem

A federated learning system which is an aspect of the invention disclosed in the present application a federated learning system that includes a plurality of client terminals each having a learning data set and a server communicable with the plurality of client terminals, and executes federated learning which repeats a process in which each of the plurality of client terminals trains a model by using the learning data set and the server integrates the models of the plurality of client terminals by using a training result. The learning data set includes one or more data samples including a client ID for specifying the client terminal, a first explanatory variable, and a first objective variable, a calculation process by each of the plurality of client terminals is executed, and a first federated learning process is executed which repeats a first training process by each of the plurality of client terminals and a first integration process by the server until a first end condition is satisfied, in the calculation process, each of the plurality of client terminals calculates similarity between the data sample and the plurality of learning data sets by inputting the data sample to a similarity calculation model for calculating similarity between the data sample and the plurality of learning data sets, in the first training process, each of the plurality of client terminals trains an individual analysis model for calculating a predicted value of the first objective variable from the first explanatory variable on the basis of the individual analysis model, the first explanatory variable, the first objective variable, and a specific similarity with a specific learning data set calculated in each of the plurality of client terminals by the calculation process, and in the first integration process, the server integrates a plurality of first training results by the first training process from the plurality of client terminals, and generates first update information regarding an integrated individual analysis model obtained by integrating the individual analysis models of the plurality of client terminals.

Advantageous Effects of Invention

According to a representative embodiment of the present invention, a model suitable for each client terminal participating in federated learning can be provided. Problems, configurations, and effects other than those described above will become apparent from the description of the following embodiments.

Brief Description of Drawings

[FIG. 1] FIG. 1 is an explanatory diagram illustrating a federated learning example according to the present embodiment.
[FIG. 2] FIG. 2 is an explanatory diagram illustrating an example of a learning data set.
[FIG. 3] FIG. 3 is an explanatory diagram illustrating an example of federated learning of similarity calculation models.
[FIG. 4] FIG. 4 is an explanatory diagram illustrating an example of federated learning of individual analysis models.
[FIG. 5] FIG. 5 is an explanatory diagram illustrating a specific example of learning weight calculation illustrated in FIG. 4.
[FIG. 6] FIG. 6 is an explanatory diagram illustrating a specific example of model training 411t by weighting illustrated in FIG. 4.
[FIG. 7] FIG. 7 is an explanatory diagram illustrating a specific example of model training 412t by weighting illustrated in FIG. 4.
[FIG. 8] FIG. 8 is an explanatory diagram illustrating a specific example of model training 413t by weighting illustrated in FIG. 4.
[FIG. 9] FIG. 9 is a sequence diagram of federated learning in the federated learning system.
[FIG. 10] FIG. 10 is an explanatory diagram 10 illustrating an example of a management screen.
[FIG. 11] FIG. 11 is an explanatory diagram 11 illustrating an example of an information display screen.
[FIG. 12] FIG. 12 is a block diagram illustrating 12 a hardware configuration example of a server and a client terminal.

Description of Embodiments

<Federated Learning Example>

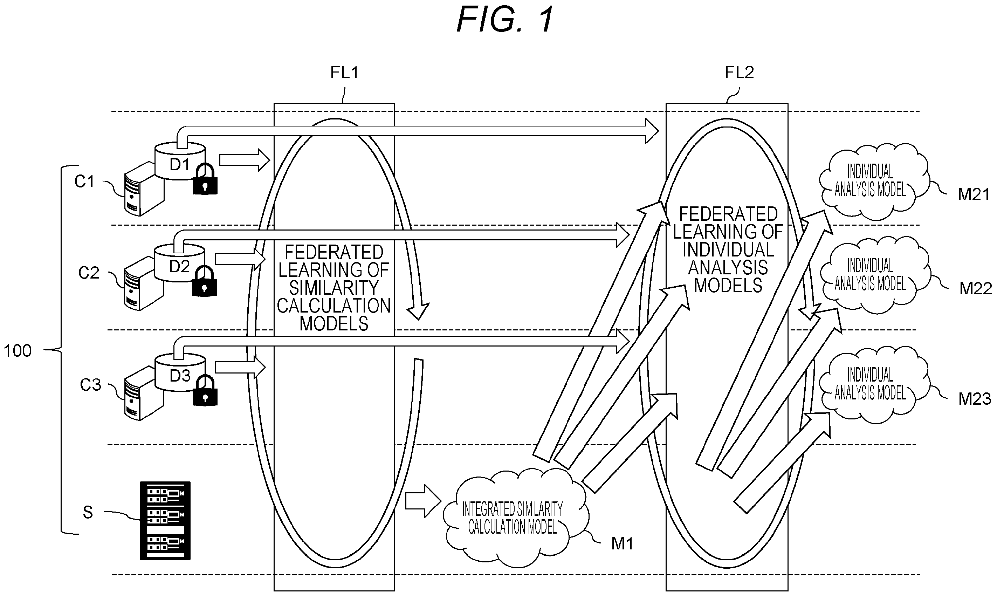

FIG. 1 is an explanatory diagram illustrating a federated learning example according to the present embodiment. A federated learning system 100 includes a server S and a plurality of (three as an example in FIG. 1) client terminals C1 to C3. In a case where the client terminals are not distinguished, the client terminals are referred to as client terminals Ck (k = 1, 2, 3,..., K). The number of client terminals Ck is not limited to three, and may be two or more. In this example, K = 3. The server S and the client terminal Ck are communicably connected via a network such as the Internet, a local area network (LAN), or a wide area network (WAN).
The client terminals C1 to C3 have learning data sets D1 to D3. In a case where the learning data sets are not distinguished, the learning data sets are referred to as learning data sets Dk. The learning data set Dk is a combination of learning data serving as an explanatory variable and correct answer data serving as an objective variable. It is assumed that the learning data set Dk is prohibited from being taken out from the client terminal Ck or the base where the client terminal Ck is installed.
The client terminal Ck is a computer that individually learns the learning data set Dk by giving the learning data set Dk to a prediction model, and transmits a training result such as a model parameter of the learned prediction model or a gradient thereof to the server S each time the training result is learned.
The server S is a computer that generates an integrated prediction model by integrating prediction models for respective client terminals Ck by using the training results from the client terminals Ck and transmits the integrated prediction model to the client terminals Ck. The client terminal Ck gives the learning data set Dk to the integrated prediction model from the server S to train the prediction model. By repeating such learning, the federated learning system 100 executes federated learning.
In the present embodiment, the federated learning system 100 executes two types of federated learning. One is federated learning FL1 of similarity calculation models, and the other is federated learning FL2 of individual analysis models.

The federated learning FL1 of similarity calculation models is federated learning that executes the above-described federated learning using the similarity calculation model as a prediction model to generate an integrated similarity calculation model M1 in which the similarity calculation models from the client terminals Ck are integrated. In a case where attention is paid to the learning data set Dk (hereinafter, in order to distinguish from Dk, referred to as a learning data set Dj) of the client terminal Ck (hereinafter, in order to distinguish from Ck, referred to as a client terminal Cj) as a learning target among the client terminals C1 to CK, the similarity calculation model is a prediction model that calculates similarity with the learning data set Dk for i-th (i is an integer satisfying $1 \leq i \leq Nj$, and Nj is the total number of data samples of the learning data set Dj) data sample (hereinafter, referred to as a data sample i) of the learning data set Dj.

Specifically, for example, the similarity calculation model is a model that calculates a tendency score having a client ID for uniquely specifying the client terminal Ck as an allocation variable.

Hereinafter, k is used for an arbitrary client terminal and the learning data set thereof, but j is used for a client terminal as a learning target and the learning data set thereof.

By generating the integrated similarity calculation model M1 prior to the federated learning FL2 of individual analysis models, the influence on the federated learning for each data sample i can be adjusted in the federated learning FL2 of individual analysis models.

The federated learning FL2 of individual analysis models is federated learning that generates individual analysis models M21 to M23 obtained by integrating individual analysis models for the client terminal Cj obtained by the client terminals C1 to C3.

Specifically, for example, the individual analysis model M21 is a prediction model obtained by integrating individual analysis models for the client terminal C1 (j=1) from the client terminals C1 to C3, the individual analysis model M22 is a prediction model obtained by integrating individual analysis models for the client terminal C2 (j=2) from the client terminals C1 to C3, and the individual analysis model M23 is a prediction model obtained by integrating individual analysis models for the client terminal C3 (j=3) from the client terminals C1 to C3.

By executing the federated learning FL2 of individual analysis models, appropriate individual analysis models M21 to M23 are generated for respective client terminals C.

<Learning Data Set Dk>

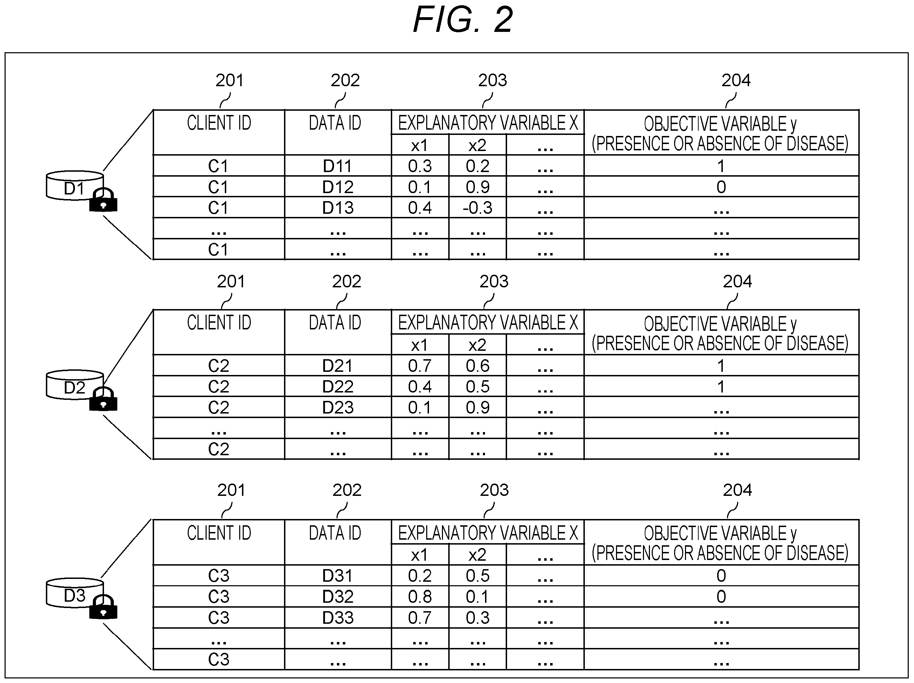

FIG. 2 is an explanatory diagram illustrating an example of the learning data set Dk. The learning data set Dk includes, as fields, a client ID (in the following drawings, may be referred to as "CID") 201, a data ID 202, an explanatory variable 203 (may be referred to as an explanatory variable X), and an objective variable 204 (may be referred to as a target variable y). A combination of values of fields in the same row is an entry that defines one data sample. Each of the learning data sets D1 to D3 is, for example, a set of data samples of a patient group for each hospital.

The client ID 201 is identification information for uniquely specifying the client terminal Ck. The value of the client ID 201 is expressed by Ck. The data ID 202 is identification information for uniquely specifying the data sample. The value of the data ID 202 is expressed by Dki. i is a number unique to the data sample. The data ID 202 specifies, for example, a patient. The explanatory variable 203 is learning data used in the federated learning FL2 of individual analysis models and includes one or more features x1, x2, and so on (in a case where the features are not distinguished, the features are simply referred to as features x). The feature x is, for example, the height, weight, blood pressure, or the like of the patient specified by the data ID 202.

The objective variable 204 is correct answer data used in the federated learning FL2 of individual analysis models. The objective variable 204 indicates, for example, the presence or absence of a disease in the patient specified by the data ID 202. y = 1 indicates presence of disease, and y = 0 indicates absence of disease.

<Federated Learning FL1 of Similarity Calculation Model>

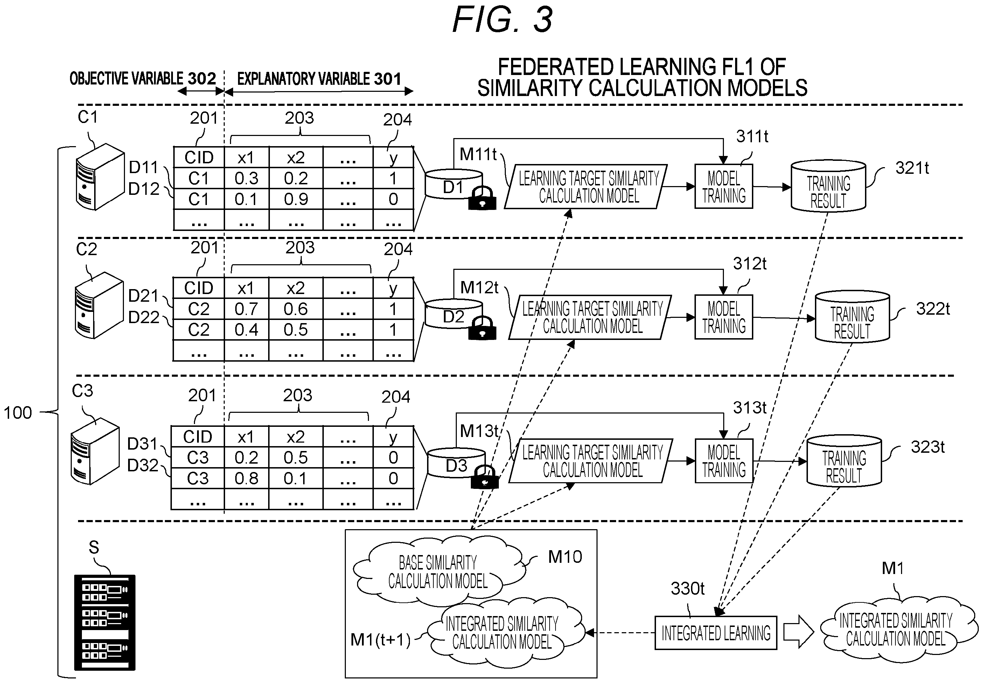

FIG. 3 is an explanatory diagram illustrating an example of the federated learning FL1 of similarity calculation models. In the federated learning FL1 of similarity calculation models, a combination of the explanatory variable 203 and the objective variable 204 of the learning data set Dk is an explanatory variable 301, and the client ID 201 is an objective variable 302.

The server S includes a similarity calculation model (hereinafter, a base similarity calculation model) M10 as a base. The base similarity calculation model M10 may be an unlearned neural network or a learned neural network in which a model parameter $\varphi_k^t$ such as a weight and a bias is set. t is a natural number in ascending order starting from 1 indicating the number of executions of the federated learning FL1 of similarity calculation models. The server S transmits the base similarity calculation model M10 to the client terminals C1 to C3.

Note that if the client terminal Ck has an unlearned neural network, the server S may transmit the model parameter $\varphi_k^t$ to the client terminal Ck, and the client terminal Ck may construct the base similarity calculation model M10 by setting the model parameter $\varphi_k^t$ received from the server S to the unlearned neural network.

The base similarity calculation model M10 is a learning target similarity calculation model M11t of the first federated learning FL1 in the client terminal Ck.

The client terminal Ck executes model training 31kt (311t to 313t) in the t-th federated learning FL1. Specifically, for example, the client terminal Ck performs training individually by giving the explanatory variable 301 and the objective variable 302 of the learning data set D1 to the learning target similarity calculation model M1kt (M11t to M13t). The client terminal Ck transmits, to the server S, the model parameter $\varphi_k{}^t$ used when the learning target similarity calculation model M1kt is updated or the training result 32kt (321t to 323t) which is a gradient $gs_k{}^t$ thereof.

The server S executes the integrated learning 330t in the t-th federated learning FL1 by using the training result 32kt to generate the next integrated similarity calculation model M1(t+1). Specifically, for example, the server S generates the integrated similarity calculation model M1(t+1) by using the integrated result obtained by integrating the training result 32kt, and transmits the integrated similarity calculation model M1(t+1) or an integrated model parameter $\varphi^{t+1}$ thereof to the client terminal Ck. Accordingly, the learning target similarity calculation model M1kt in the next federated learning FL1 is set in the client terminal Ck.

In this manner, the federated learning FL1 is repeatedly executed. In a case where the number of executions t reaches a predetermined threshold T1 or the accuracy of the integrated similarity calculation model M1t reaches a target accuracy, the server S ends the federated learning FL1, outputs the latest integrated similarity calculation model M1(t+1) as the integrated similarity calculation model M1, and transmits the integrated similarity calculation model M1 to the client terminals C1 to C3.

Hereinafter, a formula used in the federated learning FL1 of similarity calculation models is defined.

$$[p_j]^t = h\ (X,\ y;\ \varphi_j{}^t)\cdots(1)$$

The above formula (1) is a calculation formula that defines a similarity calculation model, and is executed by the model training 31jt of the client terminal Cj. A function h is a learning target similarity calculation model M1jt (M11t to M13t) defined by the explanatory variable 301, which is a combination of the explanatory variable 203(X) and the objective variable 204(y), and the model parameter $\varphi_j{}^t$. $[p_j]^t$ is a prediction probability indicating which learning data set Dk each data sample i of the learning data set Dj of the client terminal Cj is similar to in the t-th federated learning FL1.

When the total number of data samples i of the learning data set Dj is $N_j$, the prediction probability $[p_j]^t$ is a matrix of $N_j \times K$. That is, a row vector $[p_{ji}]^t$, which is a combination of K elements in the i-th row of this matrix, is a prediction probability indicating similarity between the data sample i of the learning data set Dj and the learning data set D1, a prediction probability indicating similarity between the data sample i of the learning data set Dj and the learning data set D2, a prediction probability indicating similarity between the data sample i of the learning data set Dj and the learning data set D3, ..., and a prediction probability indicating similarity between the data sample i of the learning data set Dj and the learning data set DK.

In addition, a column vector $[p_j{}^k]^t$, which is a combination of $N_j$ elements in the k-th column of the matrix of the prediction probability $[p_j]^t$, is a prediction probability indicating similarity between the first (i = 1) data sample i of the learning data set Dj and the learning data set Dk, a prediction probability indicating similarity between the second (i = 2) data sample i of the learning data set Dj and the learning data set Dk, a prediction probability indicating similarity between the third (i = 3) data sample i of the learning data set Dj and the learning data set Dk,..., and a prediction probability indicating similarity between the $N_j$-th (i = $N_j$) data sample i of the learning data set Dj and the learning data set Dk.

[Mathematical Formula 1]

$$H(\varphi_j{}^t) \overset{\text{def}}{=} \frac{1}{N_j} \sum_i^{N_j} loss\left(p_{ji}, [p_{ji}]^t; \varphi_j{}^t\right)\quad …(2)$$

The above formula (2) is a loss function $H(\varphi_j{}^t)$ calculated by the model training 31jt of the client terminal Cj in the t-th federated learning FL1. $p_{ji}$ is similarity between the data sample i of the learning data set Dj and the learning data sets D1 to D3. This similarity $p_{ji}$ has, for example, a range of 0.0 to 1.0, and a larger value indicates greater similarity.

When j = 1, $p_{ji}$ = (1.0,0,0), indicating that the data sample i is a data sample in the learning data set D1. When j = 2, $p_{ji}$ = (0,1.0,0), indicating that the data sample i is a data sample in the learning data set D2. When j = 3, $p_{ji}$ = (1.0,0,0), indicating that the data sample i is a data sample in the learning data set D3.

$[p_{ji}]^t$ is a row vector which is a prediction probability indicating how similar the data sample i is to the learning data sets D1 to D3 in the matrix indicated by the prediction probability $[p_j]^t$ in the t-th federated learning LF1.

$N_j$ is the total number of data samples i in the learning data set Dj. The function loss is an error function of the data sample i, and an average value of the error functions loss of the data samples i is a loss function $H(\varphi_j^t)$.
[Mathematical Formula 2]

$$gs_j^t = \nabla H(\varphi_j^t) \quad ...(3)$$

The above formula (3) is a calculation formula that defines a gradient $gs_j^t$ of the model parameter $\varphi_j^t$, and is executed by the model training 31jt of the client terminal Cj. $\eta$ is a learning rate. J is the total number of client terminals Cj as a learning target, and J = K. In a case where the following formula (4) is applied, the client terminal Cj transmits the gradient $gs_j^t$ as the training result 32jt to the server S.
[Mathematical Formula 3]

$$\varphi^{t+1} \leftarrow \varphi^t - \eta \sum_{j=1}^{J} \frac{N_j}{N} gs_j^t \quad ...(4)$$

The above formula (4) is a calculation formula for updating the integrated model parameter $\varphi_j^t$ to an integrated model parameter $\varphi_j^{t+1}$, and is executed by the integrated learning 330t of the server S. The server S receives the gradient $gs_j^t$ as the training result 32jt from the client terminal Cj and executes the above formula (4). Note that the integrated model parameter $\varphi^t$ of the first term on the right side of the above formula (4) is an integrated model parameter calculated as a result of executing the above formula (4) in the previous federated learning FL1.

[Mathematical Formula 4]

$$\varphi_i^{t+1} \leftarrow \varphi_j^t - \eta * gsj^t \quad ...(5)$$

$$\varphi^{t+1} = \sum_{j=1}^{J} \frac{N_j}{N} \varphi_j^{t+1} \quad ...(6)$$

The above formula (5) is a calculation formula for updating the model parameter $\varphi_j^t$ to the model parameter $\varphi_j^{t+1}$, and is executed by the integrated learning 330t of the server S. The formula is executed by the model training 31jt of the client terminal Cj. In a case where the above formula (5) is applied, the client terminal Cj transmits the updated model parameter $\varphi_j^{t+1}$ as the training result 32jt to the server S.

The above formula (6) is a calculation formula for calculating the integrated model parameter $\varphi^{t+1}$ by using the updated model parameter $\varphi_j^{t+1}$ of the above formula (5), and is executed by the integrated learning 330t of the server S. N is the total number of data samples i of the client terminals C1 to CJ.

The federated learning system 100 calculates the integrated model parameter $\varphi^{t+1}$ by using either the update method according to the above formula (4) or the update method of the formulas (5) and (6). The server S updates the integrated similarity calculation model M1t (the base similarity calculation model M10 when t = 0) with the integrated model parameter $\varphi^{t+1}$ to generate the integrated similarity calculation model M1(t+1).

The server S transmits the integrated similarity calculation model M1(t+1) or the integrated model parameter $\varphi^{t+1}$ thereof to the client terminals C1 to C3, thereby updating the above formula (1).

$$[p_j]^{t+1} = h\ (X,\ y;\ \varphi^{t+1}) \cdots (7)$$

The above formula (6) is a calculation formula that defines the integrated similarity calculation model M1(t+1), is generated by the integrated learning 330 of the server S, is transmitted to the client terminal Ck, and becomes the learning target similarity calculation model M1kt in the next federated learning FL1.

$$[p_j] = h \ (X, \ y; \ \varphi) \cdots (8)$$

The above formula (8) is a calculation formula that defines the integrated similarity calculation model M1 when the federated learning FL1 ends. Since the formula is the same as the above formula (7) at the end of the federated learning FL1, "t+1" is deleted from the above formula (7).

<Federated Learning FL2 of Individual Analysis Models>

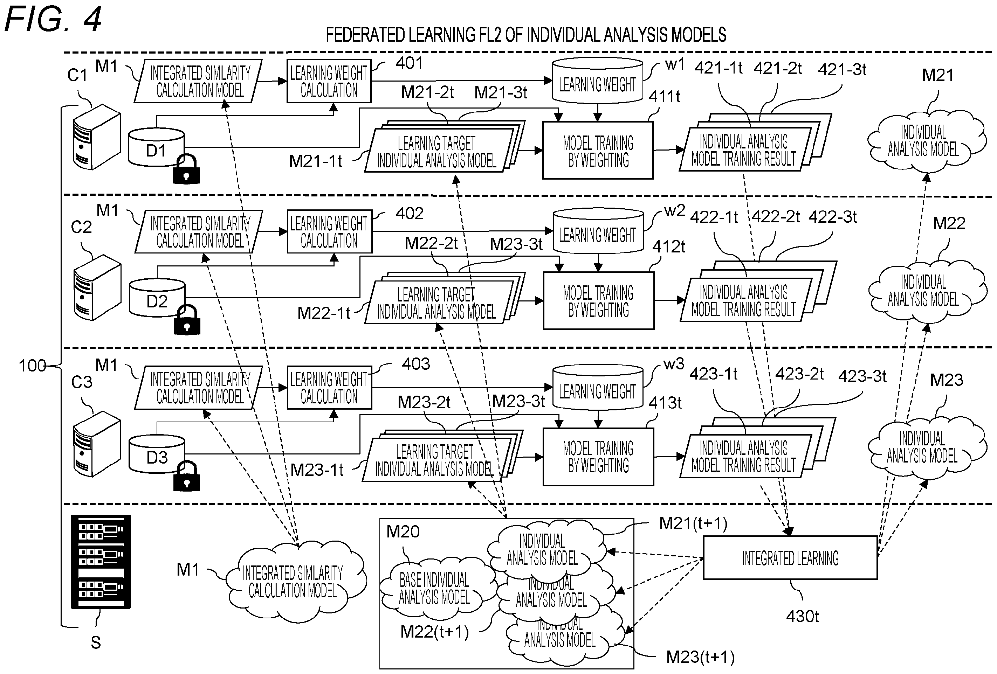

FIG. 4 is an explanatory diagram illustrating an example of the federated learning FL2 of individual analysis models. The client terminal C1 executes learning weight calculation 401. Specifically, for example, the client terminal Cj inputs the explanatory variable 301 of the learning data set Dj to the integrated similarity calculation model M1 (above formula (8)) generated in FIG. 3, thereby calculating the prediction probability $[p_j]$ indicating which learning data set Dk each data sample i of the learning data set Dj is similar to. The client terminal Cj calculates a learning weight $w_j$ by using the calculated prediction probability $[p_j]$.

The server S has an individual analysis model (hereinafter, base individual analysis model) M20 as a base. The base individual analysis model M20 may be an unlearned neural network or a learned neural network in which a model parameter $\theta^t$ such as a weight and a bias is set. The server S transmits the base individual analysis model M20 to the client terminal Ck.

Note that if the client terminal Ck has an unlearned neural network, the server S may transmit the model parameter $\theta^t$ to the client terminal Ck, and the client terminal Ck may construct the base individual analysis model M20 by setting the model parameter $\theta^t$ received from the server S to the unlearned neural network.

The base individual analysis model M20 is a learning target individual analysis model M2j-kt of the first federated learning FL2 in the client terminal Ck. t is a natural number in ascending order starting from 1 indicating the number of executions of the federated learning FL2 of individual analysis models.

When j = 1, the client terminal C1 holds learning target individual analysis models M21-1t to M21-3t. When j = 2, the client terminal C2 holds learning target individual analysis models M22-1t to M22-3t. When j = 3, the client terminal C3 holds learning target individual analysis models M23-1t to M23-3t.

The client terminal Cj executes model training 41jt by weighting. Specifically, for example, the client terminal Cj inputs the explanatory variable 203 of the learning data set Dj to each learning target individual analysis model M2j-kt, thereby calculating a predicted value $[y_j^k]$ of the objective variable 204 for each learning target individual analysis model M2j-kt. The client terminal Cj calculates a loss function $F(\theta_j^{kt})$ for each learning target individual analysis model M2j-kt, by using the learning weight $w_j$, the objective variable y, the predicted value $[y_j^k]$, and the model parameter $\theta_j^{kt}$.

Then, the client terminal Cj calculates a gradient $ga_j^{kt}$ of the model parameter $\theta_j^{kt}$ as the individual analysis model training result 42j-kt, and updates the model parameter $\theta_j^{kt}$ to a model parameter $\theta_j^{k(t+1)}$. The model parameter $\theta_j^{k(t+1)}$ is also included in the individual analysis model training result 42j-kt.

When j = 1, the client terminal C1 generates individual analysis model training results 421-1t to 421-3t. The individual analysis model training result 421-1t is a model parameter $\theta_1^{1t}$ updated by the learning target individual analysis model M21-1t or a gradient $ga_1^{1t}$ thereof. The individual analysis model training result 421-2t is a model parameter $\theta_1^{2t}$ updated by the learning target individual analysis model M21-2t or a gradient $ga_1^{2t}$ thereof. The individual analysis model training result 421-3t is a model parameter $\theta_1^{3t}$ updated by the learning target individual analysis model M21-3t or a gradient $ga_1^{3t}$ thereof.

When j = 2, the client terminal C2 generates individual analysis model training results 422-1t to 422-3t. The individual analysis model training result 422-1t is a model parameter $\theta_2^{1t}$ updated by the learning target individual analysis model M22-1t or a gradient $ga_2^{1t}$ thereof. The individual analysis model training result 422-2t is a model parameter $\theta_2^{2t}$ updated by the learning target individual analysis model M22-2t or a gradient $ga_2^{2t}$ thereof. The individual analysis model training result 422-3t is a model parameter $\theta_2^{3t}$ updated by the learning target individual analysis model M22-3t or a gradient $ga_2^{3t}$ thereof.

When j = 3, the client terminal C3 generates individual analysis model training results 423-1t to 423-3t. The individual analysis model training result 423-1t is a model parameter $\theta_3^{1t}$ updated by the learning target individual analysis model M23-1t or a gradient $ga_3^{1t}$ thereof. The individual analysis model training result 423-2t is a model parameter $\theta_3^{2t}$ updated by the learning target individual analysis model M23-2t or a gradient $ga_3^{2t}$ thereof. The individual analysis model training result 423-3t is a model parameter $\theta_3^{3t}$ updated by the learning target individual analysis model M23-3t or a gradient $ga_3^{3t}$ thereof.

The server S receives the individual analysis model training result 42j-kt from the client terminal Ck. Specifically, for example, the server S receives the individual analysis model training results 421-1t to 421-3t from the client terminal C1, receives the individual analysis model training results 422-1t to 422-3t from the client terminal C2, and receives the individual analysis model training results 423-1t to 423-3t from the client terminal C3.

The server S executes the integrated learning 430t in the t-th federated learning FL2 and generates a next individual analysis model M2k(t+1). Specifically, for example, the server S integrates the individual analysis model training results 421-1t, 422-1t, and 423-1t to generate an individual analysis model M21(t+1). In addition, the server S integrates the individual analysis model training results 421-2t, 422-2t, and 423-2t to generate an individual analysis model M22(t+1). In addition, the server S integrates the individual analysis model training results 421-3t, 422-3t, and 423-3t to generate an individual analysis model M23(t+1).

The server S transmits an individual analysis model M2j(t+1) or an integrated model parameter $\theta_j^{t+1}$ thereof to the client terminal Ck. Accordingly, the learning target individual analysis model M2j-kt in the next federated learning FL2 is set in the client terminal Ck.

Specifically, for example, the server S transmits the individual analysis model M21(t+1) or an integrated model parameter $\theta_1^{t+1}$ thereof to the client terminals C1 to C3. Accordingly, by using this reception information, the client terminal C1 sets the learning target individual analysis model M21-1t in the next federated learning FL2, the client terminal C2 sets the learning target individual analysis model M22-1t in the next federated learning FL2, and the client terminal C3 sets the learning target individual analysis model M23-1t in the next federated learning FL2.

In addition, the server S transmits the individual analysis model M22(t+1) or an integrated model parameter $\theta_2^{t+1}$ thereof to the client terminals C1 to C3. Accordingly, by using this reception information, the client terminal C1 sets the learning target individual analysis model M21-2t in the next federated learning FL2, the client terminal C2 sets the learning target individual analysis model M22-2t in the next federated learning FL2, and the client terminal C3 sets the learning target individual analysis model M23-2t in the next federated learning FL2.

In addition, the server S transmits the individual analysis model M23(t+1) or an integrated model parameter $\theta_3^{t+1}$ thereof to the client terminals C1 to C3. Accordingly, by using this reception information, the client terminal C1 sets the learning target individual analysis model M21-3t in the next federated learning FL2, the client terminal C2 sets the learning target individual analysis model M22-3t in the next federated learning FL2, and the client terminal C3 sets the learning target individual analysis model M23-3t in the next federated learning FL2.

In this manner, the federated learning FL2 is repeatedly executed. In a case where the number of executions t reaches a predetermined threshold T2 or the accuracy of all of the individual analysis models M21(t+1) to M2K(t+1) reaches the target accuracy, the server S ends the federated learning FL2, outputs the latest individual analysis model M2k(t+1) as the individual analysis model M2k, and transmits the individual analysis model M2k to the client terminal Ck.

Specifically, for example, the server S outputs the individual analysis model M21(t+1) as the individual analysis model M21, and transmits the individual analysis model M21 to the client terminal C1. In addition, the server S outputs the individual analysis model M22(t+1) as the individual analysis model M22, and transmits the individual analysis model M22 to the client terminal C2. In addition, the server S outputs the individual analysis model M23(t+1) as the individual analysis model M23, and transmits the individual analysis model M23 to the client terminal C3.

<Learning Weight Calculation 40k>

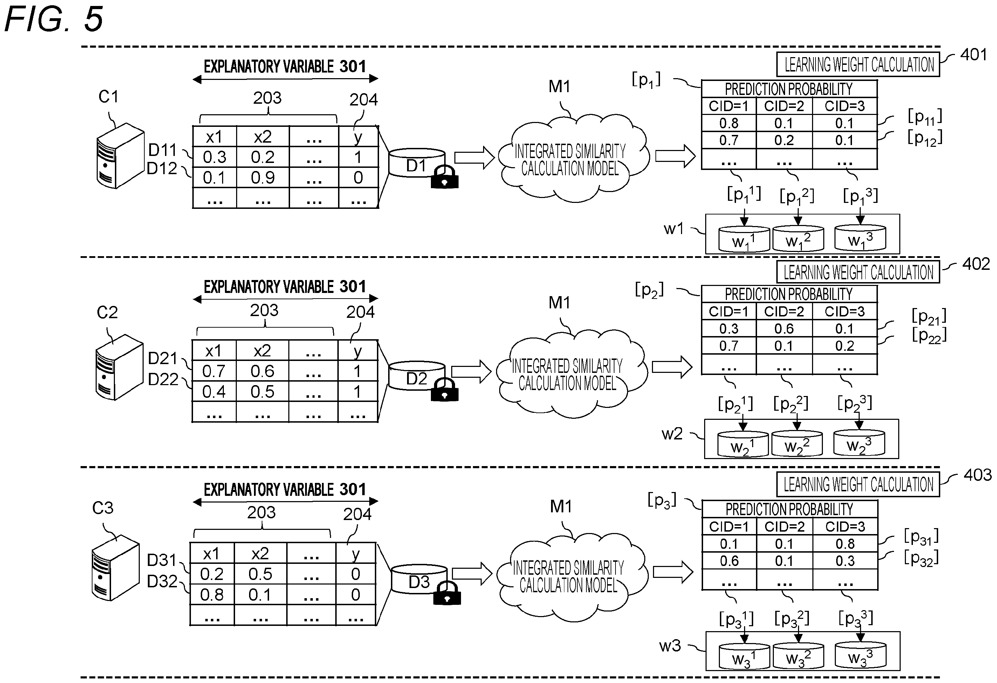

FIG. 5 is an explanatory diagram illustrating a specific example of learning weight calculation 40k (401 to 403) illustrated in FIG. 4. Note that, in FIG. 5, the learning data set D1 includes D11 and D12 as the data sample i, the learning data set D2 includes D21 and D22 as the data sample i, and the learning data set D3 includes D31 and D32 as the data sample i.

The client terminal Cj inputs the explanatory variable 301 of the learning data set Dj to the integrated similarity calculation model M1, and calculates the prediction probability $[p_j]$. The column of CID = k of the prediction probability $[p_j]$ is a column vector indicating the prediction probability $[p_j^k]$ indicating how similar all the data samples i of the learning data set Dj are to the learning data set Dk. In addition, the prediction probability $[p_{ji}]$ is a row vector indicating a prediction probability indicating how similar a certain data sample i of the learning data set Dj is to each learning data set Dk.

Specifically, for example, when j = 1, the client terminal C1 inputs the explanatory variable 301 of the learning data set D1 to the integrated similarity calculation model M1, and calculates the prediction probability $[p_1]$. The prediction probability $[p_{11}]$ corresponding to the data sample D11 is calculated by inputting the explanatory variable 301 of the data sample D11 to the integrated similarity calculation model M1, and the prediction probability $[p_{12}]$ corresponding to the data sample D12 is calculated by inputting the explanatory variable 301 of the data sample D12 to the integrated similarity calculation model M1. In addition, the columns of CID = 1 to 3 of the prediction probability $[p_1]$ are the prediction probabilities $[p1^1]$, $[p1^2]$, and $[p1^3]$ indicating how similar each of the data samples i of the learning data set D1 is to the learning data sets D1 to D3. The client terminal C1 calculates learning weights $w_1^1$, $w_1^2$, and $w_1^3$ for respective prediction probabilities $[p_1^1]$, $[p_1^2]$, and $[p_1^3]$.

In addition, when j = 2, the client terminal C2 inputs the explanatory variable 301 of the learning data set D2 to the integrated similarity calculation model M1, and calculates the prediction probability $[p_2]$. The prediction probability $[p_{21}]$

corresponding to the data sample D21 is calculated by inputting the explanatory variable 301 of the data sample D21 to the integrated similarity calculation model M1, and the prediction probability $[p_{22}]$ corresponding to the data sample D22 is calculated by inputting the explanatory variable 301 of the data sample D22 to the integrated similarity calculation model M1. In addition, the columns of CID = 1 to 3 of the prediction probability $[p_2]$ are the prediction probabilities $[p_2{}^1]$, $[p_2{}^2]$, and $[p_2{}^3]$ indicating how similar each of the data samples i of the learning data set D2 is to the learning data sets D1 to D3. The client terminal C2 calculates learning weights $w_2{}^1$, $w_2{}^2$, and $w_2{}^3$ for respective prediction probabilities $[p_2{}^1]$, $[p_2{}^2]$, and $[p_2{}^3]$.

In addition, when j = 3, the client terminal C3 inputs the explanatory variable 301 of the learning data set D3 to the integrated similarity calculation model M1, and calculates the prediction probability $[p_3]$. The prediction probability $[p_{31}]$ corresponding to the data sample D31 is calculated by inputting the explanatory variable 301 of the data sample D31 to the integrated similarity calculation model M1, and the prediction probability $[p_{32}]$ corresponding to the data sample D32 is calculated by inputting the explanatory variable 301 of the data sample D32 to the integrated similarity calculation model M1. In addition, the columns of CID = 1 to 3 of the prediction probability $[p_3]$ are the prediction probabilities $[p_3{}^1]$, $[p_3{}^2]$, and $[p_3{}^3]$ indicating how similar each of the data samples i of the learning data set D3 is to the learning data sets D1 to D3. The client terminal C3 calculates learning weights $w_3{}^1$, $w_3{}^2$, and $w_3{}^3$ for respective prediction probabilities $[p_3{}^1]$, $[p_3{}^2]$, and $[p_3{}^3]$.

Hereinafter, a mathematical formula used in the calculation of the learning weight $w_j{}^k$ in the federated learning FL2 of the individual analysis model is defined.

[Mathematical Formula 5]

$$ w_{ji}{}^k = \frac{\dfrac{1}{1 - [p_{ji}{}^k]}}{\sum_i^{N_k} \dfrac{1}{1 - [p_{ji}{}^k]}} \quad \ldots (9) $$

$W_{ji}{}^k$ on the left side is a learning weight applied to the similarity relationship between the data sample i of the learning data set Dj and the learning data set Dk. $[p_{ji}{}^k]$ on the right side is a prediction probability indicating how similar the data sample i of the learning data set Dj is to the learning data set Dk. A set of the learning weights $W_{ji}{}^k$ of all the data samples i of the learning data set Dj is the learning weight $w_j{}^k$.

<model training 41kt by Weighting>

Next, a specific example of model training 41kt (411t to 413t) by weighting illustrated in FIG. 4 will be described.

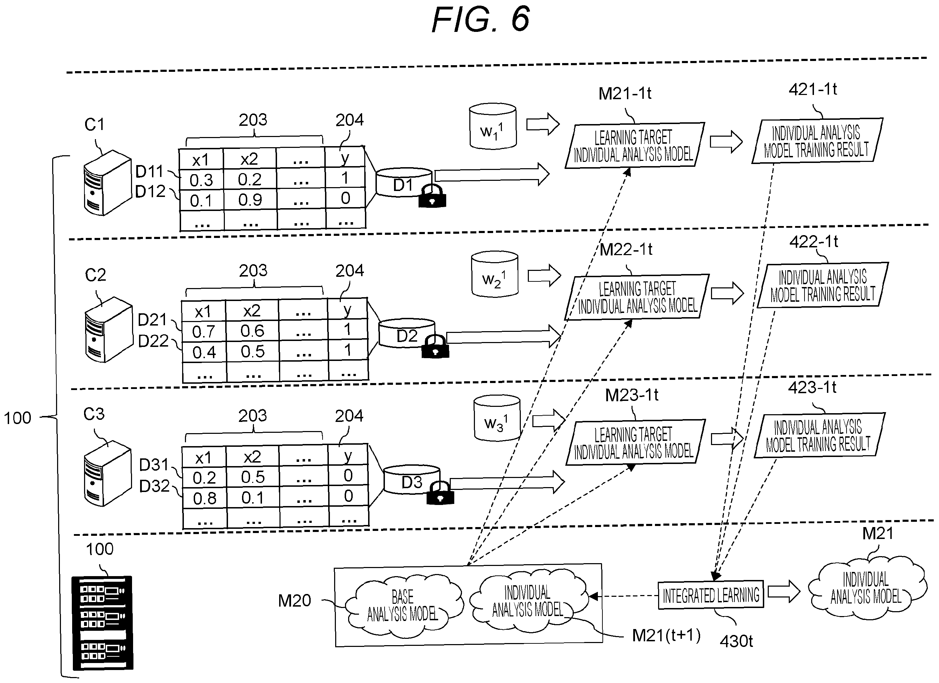

FIG. 6 is an explanatory diagram illustrating a specific example of the model training 411t by weighting illustrated in FIG. 4. The client terminal C1 updates the learning target individual analysis model M21-1t by using the explanatory variable 203 and the objective variable 204 of the learning data set D1 and the learning weight $w_1{}^1$, and outputs the individual analysis model training result 421-1t.

The client terminal C2 updates the learning target individual analysis model M22-1t by using the explanatory variable 203 and the objective variable 204 of the learning data set D2 and the learning weight $w_2{}^1$, and outputs the individual analysis model training result 422-1t.

The client terminal C3 updates the learning target individual analysis model M23-1t by using the explanatory variable 203 and the objective variable 204 of the learning data set D3 and the learning weight $w_3{}^1$, and outputs the individual analysis model training result 423-1t.

The server S integrates the individual analysis model training results 421-1t, 422-1t, and 423-1t in the integrated learning 430t to generate the next individual analysis model M21(t+1). The server S transmits the individual analysis model M21(t+1) or an integrated model parameter $\theta_1{}^{t+1}$ thereof to the client terminals C1 to C3. Accordingly, by using this reception information, the client terminal C1 sets the learning target individual analysis model M21-1t in the next federated learning FL2, the client terminal C2 sets the learning target individual analysis model M22-1t in the next federated learning FL2, and the client terminal C3 sets the learning target individual analysis model M23-1t in the next federated learning FL2. The individual analysis model M21 is an individual analysis model of the client terminal C1 determined at the end of the federated learning FL2.

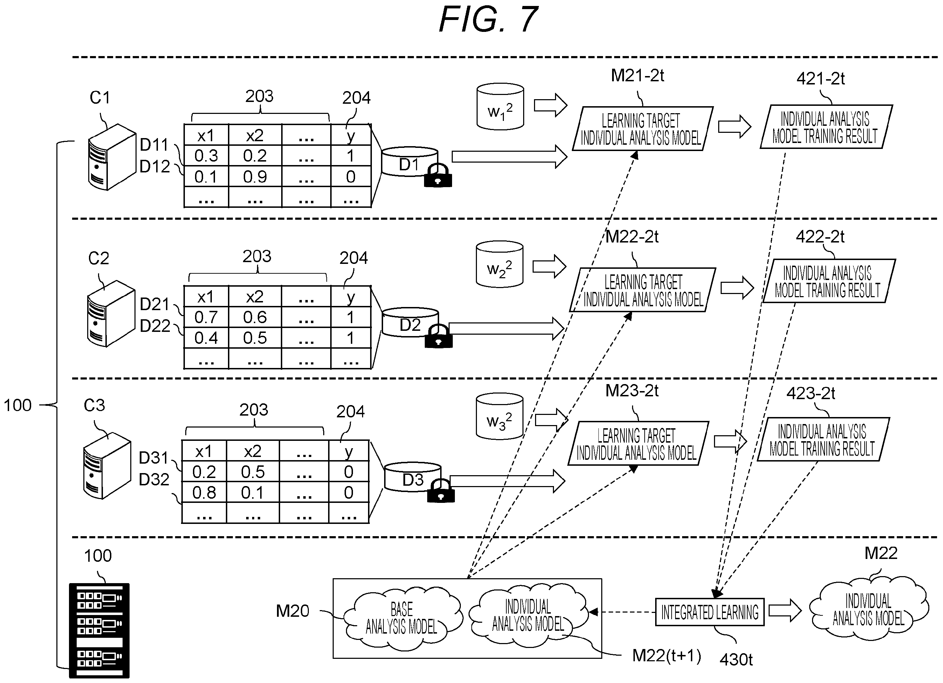

FIG. 7 is an explanatory diagram illustrating a specific example of the model training 412t by weighting illustrated in FIG. 4. The client terminal C1 updates the learning target individual analysis model M21-2t by using the explanatory variable 203 and the objective variable 204 of the learning data set D1 and the learning weight $w_1{}^2$, and outputs the individual analysis model training result 421-2t.

The client terminal C2 updates the learning target individual analysis model M22-2t by using the explanatory variable 203 and the objective variable 204 of the learning data set D2 and the learning weight $w_2{}^2$, and outputs the

individual analysis model training result 422-2t.

The client terminal C3 updates the learning target individual analysis model M23-2t by using the explanatory variable 203 and the objective variable 204 of the learning data set D3 and the learning weight $w_3{}^2$, and outputs the individual analysis model training result 423-2t.

The server S integrates the individual analysis model training results 421-2t, 422-2t, and 423-2t in the integrated learning 430t to generate the next individual analysis model M22 (t+1). The server S transmits the individual analysis model M22 (t+1) or an integrated model parameter $\theta_2{}^{t+1}$ thereof to the client terminals C1 to C3. Accordingly, by using this reception information, the client terminal C1 sets the learning target individual analysis model M21-2t in the next federated learning FL2, the client terminal C2 sets the learning target individual analysis model M22-2t in the next federated learning FL2, and the client terminal C3 sets the learning target individual analysis model M23-2t in the next federated learning FL2. The individual analysis model M22 is an individual analysis model of the client terminal C2 determined at the end of the federated learning FL2.

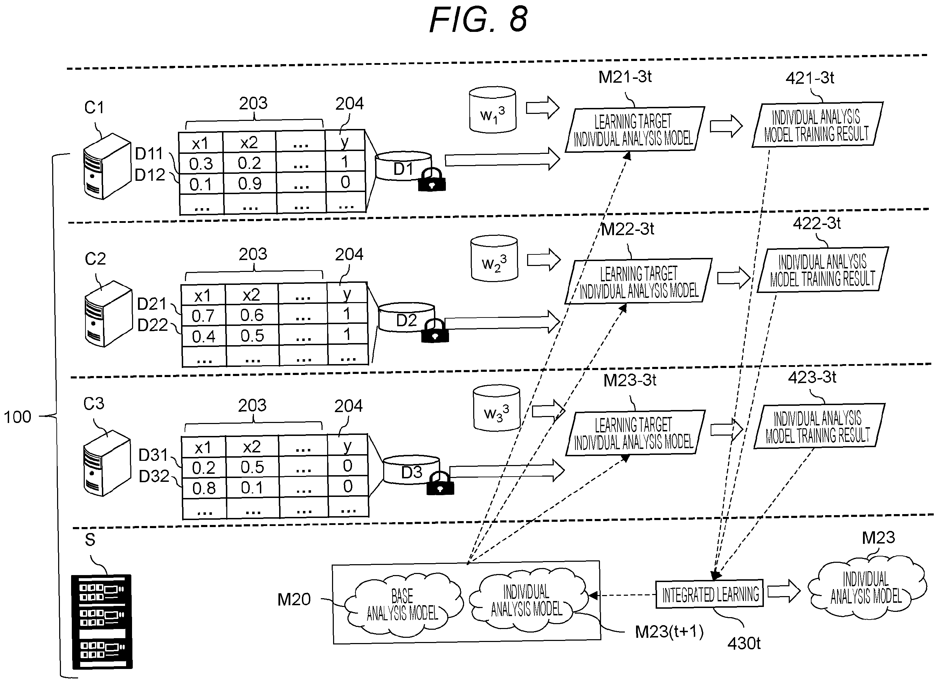

FIG. 8 is an explanatory diagram illustrating a specific example of the model training 413t by weighting illustrated in FIG. 4. The client terminal C1 updates the learning target individual analysis model M21-3t by using the explanatory variable 203 and the objective variable 204 of the learning data set D1 and the learning weight $w_1{}^3$, and outputs the individual analysis model training result 421-3t.

The client terminal C2 updates the learning target individual analysis model M22-3t by using the explanatory variable 203 and the objective variable 204 of the learning data set D2 and the learning weight $w_2{}^3$, and outputs the individual analysis model training result 422-3t.

The client terminal C3 updates the learning target individual analysis model M23-3t by using the explanatory variable 203 and the objective variable 204 of the learning data set D3 and the learning weight $w_3{}^3$, and outputs the individual analysis model training result 423-3t.

The server S integrates the individual analysis model training results 421-3t, 422-3t, and 423-3t in the integrated learning 430t to generate the next individual analysis model M23(t+1). The server S transmits the individual analysis model M23(t+1) or an integrated model parameter $\theta_3{}^{t+1}$ thereof to the client terminals C1 to C3. Accordingly, by using this reception information, the client terminal C1 sets the learning target individual analysis model M21-3t in the next federated learning FL2, the client terminal C2 sets the learning target individual analysis model M22-3t in the next federated learning FL2, and the client terminal C3 sets the learning target individual analysis model M23-3t in the next federated learning FL2. The individual analysis model M23 is an individual analysis model of the client terminal C3 determined at the end of the federated learning FL2.

Hereinafter, a formula used in the federated learning FL2 of individual analysis models is defined.

$$[y_j] \;=\; f\;(x_j;\; \theta_j)\; \bullet\bullet\bullet(10)$$

The above formula (10) defines the individual analysis model M2j. $x_j$ is the explanatory variable 203 of the learning data set Dj, and $\theta_j$ is the integrated model parameter of the individual analysis model M2j. $[y_j]$ is a predicted value of the objective variable 204 of the learning data set Dj.

[Mathematical Formula 6]

$$F(\theta_j{}^{k^t}) \stackrel{\text{def}}{=} \frac{1}{N_j} \sum_{i}^{N_j} w_{ji} * loss\left(y_{ji}, [y_{ji}]^t; \theta_j{}^{k^t}\right) \;\;\ldots(11)$$

The above formula (11) defines the loss function $F(\theta_j{}^{kt})$ in the learning target individual analysis model M2j-kt in the t-th federated learning FL2. $y_{ji}$ is the objective variable 204 of a certain data sample i of the learning data set Dj, and $[y_{ji}]$ is a predicted value thereof. $[y_{ji}]$ of all data samples i of the learning data set Dj is $[y_j]$. $W_{ji}{}^k$ is a learning weight calculated by the above formula (9).

[Mathematical Formula 7]

$$ga_j{}^{k^t} = \nabla F(\theta_j{}^{k^t}) \;\;\ldots(12)$$

The above formula (12) defines the gradient $ga_j{}^{kt}$ of the model parameter $\theta_j{}^{kt}$ in the t-th federated learning FL2. The gradient $ga_j{}^{kt}$ is calculated by the client terminal Cj.

[Mathematical Formula 8]

$$\theta_j^{k(t+1)} \leftarrow \theta_j^{kt} - \eta \sum_{k=1}^{K} \frac{P_j^{kt}}{P_j^{t}} ga_j^{kt} \quad \ldots(13)$$

$$P_j^{t} = \sum_{k=1}^{K} P_j^{kt} \quad \ldots(14)$$

$$P_j^{kt} = \sum_{i=1}^{N_k} [p_{ji}^{k}]^t \quad \ldots(15)$$

The above formula (13) is a calculation formula for executing the update of each model parameter $\theta_j^{kt}$ in the t-th federated learning FL2, and is executed in the model training 41jt by weighting of the client terminal Cj. $P_j^{t}$ is a sum of $P_j^{kt}$ of the client terminal Ck in the t-th federated learning FL2 as expressed in the above formula (14). $P_j^{kt}$ is a sum of the prediction probabilities $[p_{ji}^{k}]^t$ in the client terminal Cj in the t-th federated learning FL2 as shown in the above formula (15).

The client terminal Cj transmits updated model parameters $\theta_j^{1(t+1)}$ to $\theta_j^{3(t+1)}$ as individual analysis model training results 42j-1t, 42j-2t, and 42j1-3t to the server S. In the integrated learning 430t, the server S averages and integrates the individual analysis model training result 421-1t (updated model parameter $\theta_1^{1(t+1)}$), the individual analysis model training result 422-1t (updated model parameter $\theta_2^{1(t+1)}$), and the individual analysis model training result 423-1t (updated model parameter $\theta_3^{1(t+1)}$), for example, thereby calculating the updated integrated model parameter $\theta_1^{(t+1)}$ for the client terminal C1 and generating the individual analysis model M21(t+1).

In addition, in the integrated learning 430t, the server S averages and integrates the individual analysis model training result 421-2t (updated model parameter $\theta_2^{1(t+1)}$), the individual analysis model training result 422-2t (updated model parameter $\theta_2^{2(t+1)}$), and the individual analysis model training result 423-2t (updated model parameter $\theta_3^{2(t+1)}$), for example, thereby calculating the updated integrated model parameter $\theta_2^{(t+1)}$ for the client terminal C2 and generating the individual analysis model M22(t+1).

In addition, in the integrated learning 430t, the server S averages and integrates the individual analysis model training result 421-3t (updated model parameter $\theta_3^{1(t+1)}$), the individual analysis model training result 422-3t (updated model parameter $\theta_2^{3(t+1)}$), and the individual analysis model training result 423-3t (updated model parameter $\theta_3^{3(t+1)}$)), for example, thereby calculating the updated integrated model parameter $\theta_3^{(t+1)}$ for the client terminal C2 and generating the individual analysis model M23(t+1).

[Mathematical Formula 9]

$$\theta_j{}^{k(t+1)} \leftarrow \theta_j{}^{kt} - \eta * ga_j{}^{kt} \dots (16)$$

$$\theta_j{}^{t+1} = \sum_{k=1}^{K} \frac{P_j{}^{kt}}{P_j{}^{t}} \theta_j{}^{k(t+1)} \dots (17)$$

The above formula (16) is a calculation formula for updating each model parameter $\theta_j{}^{kt}$ in the t-th federated learning FL2 in a case where the gradient $ga_j{}^{kt}$ and the prediction probability $[p_{ji}{}^{k}]^t$ are received as the individual analysis model training result 42j-kt from the client terminal Cj, and is executed in the integrated learning 430t of the server S.

The above formula (17) is a calculation formula for updating the integrated model parameter $\theta_j{}^{t}$ in the t-th federated learning FL2 in a case where the gradient $ga_j{}^{kt}$ and the prediction probability $[p_{ji}{}^{k}]^t$ are received as the individual analysis model training result 42j-kt from the client terminal Cj, and is executed in the integrated learning 430t of the server S. Specifically, for example, the server S generates the individual analysis model M21(t+1) by using the updated integrated model parameter $\theta_1{}^{t+1}$. The server S generates the individual analysis model M22(t+1) by using the updated integrated model parameter $\theta_2{}^{t+1}$. The server S generates the individual analysis model M23(t+1) by using the updated integrated model parameter $\theta_3{}^{t+1}$.

<Sequence of Federated Learning>

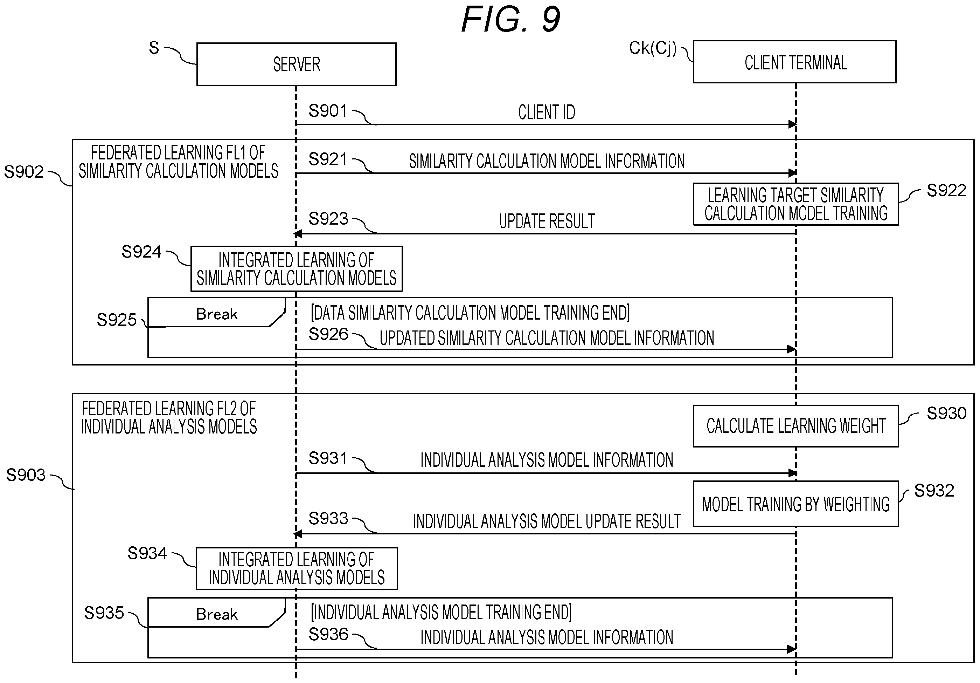

FIG. 9 is a sequence diagram of federated learning in the federated learning system 100. First, prior to the federated learning FL1 and FL2, the server S transmits the client ID 201 to each client terminal Ck (step S901). The client terminal Ck associates the client ID 201 with the learning data set Dk.

Next, the federated learning system 100 executes the federated learning FL1 of similarity calculation models (step S902), and executes the federated learning FL2 of individual analysis models (step S903).

In the federated learning FL1 of similarity calculation models (step S902), the server S transmits similarity calculation model information (the integrated similarity calculation model M1(t+1) or the integrated model parameter $\varphi^{t+1}$ thereof) to the client terminal Ck (step S921).

The client terminal Ck trains the learning target similarity calculation model by using the learning data set Dj and the similarity calculation model information (step S922).

The client terminal Ck transmits the training result 32jt in step S922 to the server S (step S923).

The server S executes the integrated learning 330t of similarity calculation models (step S924). The server S determines whether or not the end condition of the integrated learning 330t (step S924) of similarity calculation models is satisfied (step S925).

If the end condition is not satisfied, the server S transmits the updated similarity calculation model information to the client terminal Ck (step S921).

If the end condition is satisfied, the server S transmits the updated similarity calculation model information to the client terminal Ck (step S926). As a result, the client terminal Ck sets the integrated similarity calculation model M1 based on the updated similarity calculation model information, and ends the federated learning FL1 (step S902) of similarity calculation models.

In the federated learning FL2 of individual analysis models (step S903), the client terminal Cj executes the learning weight calculation 40j by using the learning data set Dj and the integrated similarity calculation model M1 to calculate the learning weight wj (step S930).

In addition, the server S transmits the individual analysis model information (the individual analysis model M2j(t+1) or the integrated model parameter $\theta_j{}^{t+1}$ thereof) to the client terminal Ck (step S931).

The client terminal Cj executes the model training 41jt by weighting, and transmits the individual analysis model training result 42j-kt to the server S (step S933).

The server S executes integrated learning 430t of the individual analysis model by using the individual analysis model training result 42j-kt (step S934).

The server S determines whether or not the end condition of the integrated learning 430t (step S934) of the individual analysis model is satisfied (step S935).

If the end condition is not satisfied, the server S transmits the updated individual analysis model information to the client terminal Ck (step S931).

If the end condition is satisfied, the server S transmits the updated individual analysis model information to the client terminal Ck (step S936). As a result, the client terminal Ck generates the individual analysis model M2j from the updated individual analysis model information, and ends the federated learning FL2 (step S903) of the individual analysis models.

<Display Screen Example>

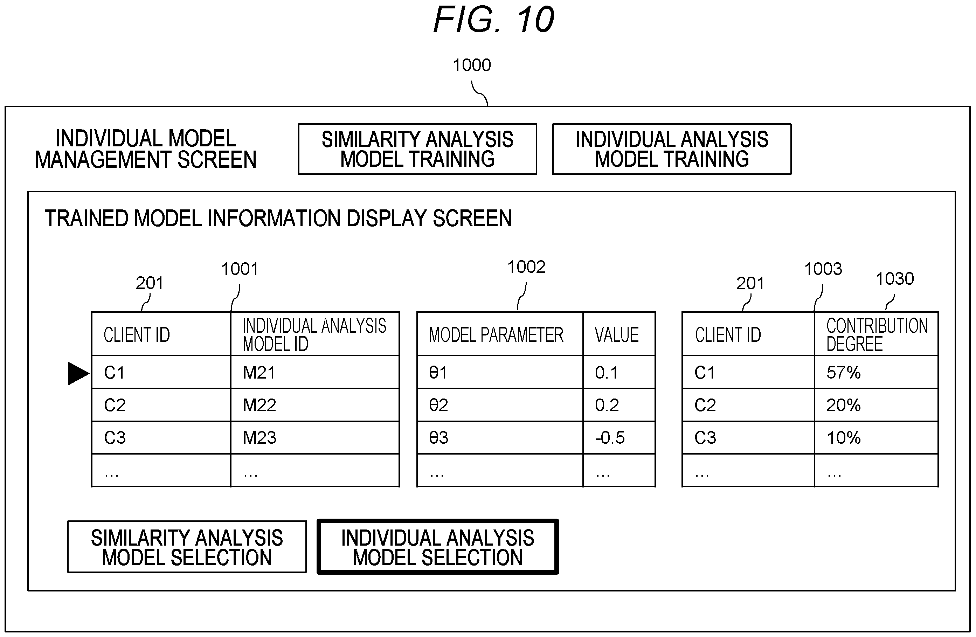

FIG. 10 is an explanatory diagram illustrating an example of a management screen. A management screen 1000 is displayed on the server S. The management screen 1000 displays a trained model list 1001, a model parameter list 1002, and a client learning contribution list 1003. The trained model list 1001 is table data in which the client ID 201 is associated with the ID (individual analysis model ID) of the individual analysis model M2j.

The model parameter list 1002 is table data for defining the value of the model parameter $\theta_j$ of the individual analysis model M2j. The client learning contribution list 1003 is table data in which the client ID 201 is associated with a contribution degree 1030 of the client terminal Cj. The contribution degree 1030 is calculated by the following formula. The contribution degree 1030 is an index value indicating how much the learning data set Dk of the client terminal Ck contributes to the learning of the individual analysis model.

[Mathematical Formula 10]

$$R_j{}^k = \frac{P_j{}^k}{P_j} \quad \dots(18)$$

$R_j{}^k$ on the left side of the above formula (18) is the contribution degree 1030 of the client terminal Cj. $P_j$ on the right side is a sum of $P_j{}^k$ of the client terminal Ck at the end of the federated learning FL2 (see the above formula (14)). $P_j{}^k$ is a sum of the prediction probabilities $[P_j{}^k]$ in the client terminal Cj at the end of the federated learning FL2 (see the above formula (14)). The contribution degree 1030 of the client terminal Cj is calculated by the server S.

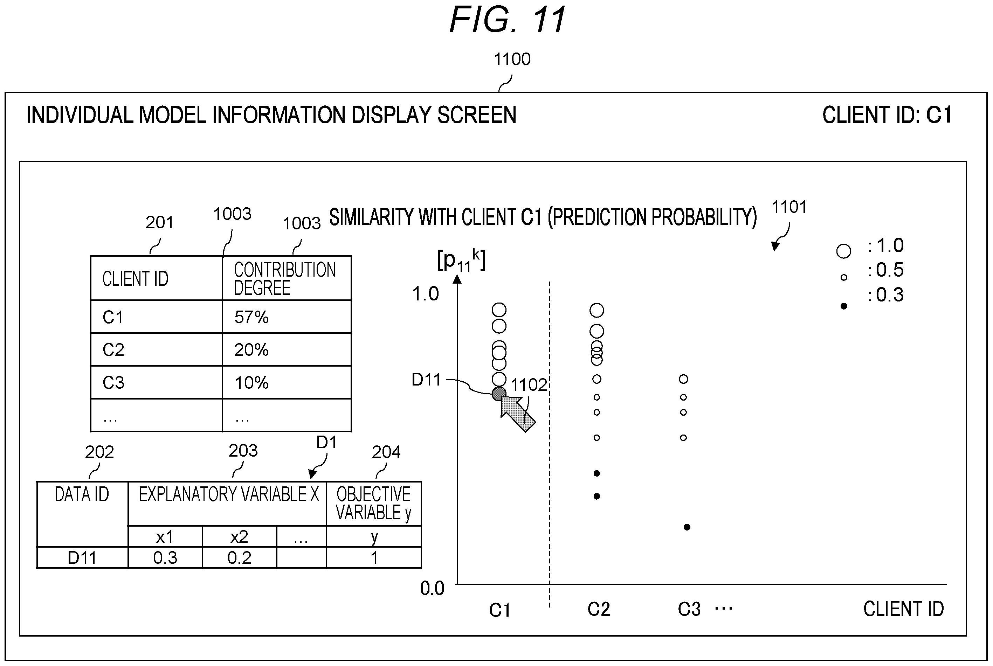

FIG. 11 is an explanatory diagram illustrating an information display screen example. The information display screen 1100 is a screen that displays the individual analysis model information for the client terminal Cj, and is displayed in the server S or the client terminal Cj. FIG. 11 illustrates an example of j = 1.

The information display screen 1100 displays the client learning contribution list 1003, and prediction probability distribution 1101 of the data sample i (in FIG. 11, D11 is used as an example) designated from the learning data set D1 of the client terminal C1 and the designated data sample D11 of the client terminal C1. Note that the data sample i is designated by an operation of the user of the server S or the client terminal C1.

The horizontal axis of the prediction probability distribution 1101 is the client ID 201, and the vertical axis is the prediction probability of the designated data sample D11 and the learning data set Dk specified by the client ID 201. A round point is a data sample i in the learning data set D1 of the client terminal C1 and indicates a prediction probability with the client terminal Ck. Note that the data sample i designated by the cursor 1102 is the data sample D11 and indicates the prediction probability with the learning data set D1.

<Hardware Configuration Example of Server S and Client Terminal Ck>

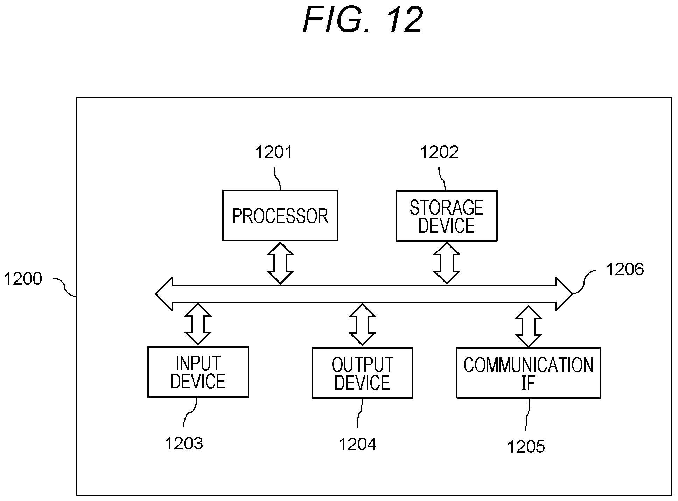

FIG. 12 is a block diagram illustrating a hardware configuration example of the server S and the client terminal Ck (hereinafter, a computer 1200). The computer 1200 includes a processor 1201, a storage device 1202, an input device 1203, an output device 1204, and a communication interface (communication IF) 1205. The processor 1201, the storage device 1202, the input device 1203, the output device 1204, and the communication IF 1205 are connected by a bus 1206. The processor 1201 controls the computer 1200. The storage device 1202 serves as a work area of the processor 1201. In addition, the storage device 1202 is a non-transitory or transitory recording medium that stores various programs and data. Examples of the storage device 1202 include a read only memory (ROM), a random access memory (RAM), a hard disk drive (HDD), and a flash memory. The input device 1203 inputs data. Examples of the input device 1203 include a keyboard, a mouse, a touch panel, a numeric keypad, a scanner, a microphone, and a sensor. The output device 1204 outputs data. Examples of the output device 1204 include a display, a printer, and a speaker. The communication IF 1205 is connected to a network and transmits and receives data.

As described above, according to the present embodiment, it is possible to provide the individual analysis model M2k suitable for each client terminal Ck participating in the federated learning. In addition, at the time of generating the integrated similarity calculation model M1, the client terminal Ck can also predict the similarity with other learning data set Dk without passing the data sample i to the other client terminal Ck or the server S, and thus, it is possible to prevent leakage of the data sample i itself.

Note that, in the above-described embodiment, the server S participates in the federated learning FL1 and FL2, but may not participate in the federated learning FL1 and may participate only in the federated learning FL2. In this case, it is sufficient if the client terminal Ck acquires, from another server, the result (the integrated similarity calculation model M1 or the learning weight wk) of the federated learning FL1 in which another server participates. In addition, conversely, the server S may participate in the federated learning FL1 and may not participate in the federated learning FL2. In this case, the client terminal Ck acquires the result (the integrated similarity calculation model M1 or the learning weight wk) of the federated learning FL1 from the server S. In this case, the integrated learning 430t is executed by another server.

In addition, the server S can transmit a program, which is a process to be executed by the client terminal Ck, to the client terminal Ck in the form of a container, for example.

In addition, the federated learning system 100 according to the above-described embodiment can also be configured as in the following [1] to [11].

[1] The federated learning system 100 includes a plurality of client terminals C1 to C3 each having a learning data set D1 to D3 and a server S communicable with the plurality of client terminals C1 to C3, and executes federated learning which repeats a process in which each of the plurality of client terminals C1 to C3 trains a model by using the learning data sets D1 to D3 and the server S integrates the models of the plurality of client terminals C1 to C3 by using a training result.

The learning data set Dk includes one or more data samples i including a client ID 201 that specifies the client terminal Ck, a first explanatory variable 203, and a first objective variable 204.

In the federated learning system 100, a calculation process (learning weight calculation 401 to 403) by each of the plurality of client terminals C1 to C3 is executed, and a first federated learning process (FL2) is executed which repeats a first training process (model training by weighting 411t to 413t) by each of the plurality of client terminals C1 to C3 and a first update process (integrated learning 330t) by the server S until a first end condition is satisfied.

In the calculation process (learning weight calculation 401 to 403), each of the plurality of client terminals C1 to C3 calculates similarity (prediction probability $[p_{ji}^k]$ t) between the data sample i and the plurality of learning data sets D1 to D3 by inputting the data sample i to a similarity calculation model M1 for calculating similarity between the data sample i and the plurality of learning data sets D1 to D3.

In the first training process (model training by weighting 411t to 413t), each of the plurality of client terminals C1 to C3 trains an individual analysis model (learning target individual analysis model M21-1t, M22-1t, M23-1t) for calculating a predicted value of the first objective variable 204 from the first explanatory variable 203 on the basis of the individual analysis model (learning target individual analysis model M21-1t, M22-1t, M23-1t), the first explanatory variable 203, the first objective variable 204, and a specific similarity (prediction probability $[p_{ji}^1]^t$) with a specific learning data set (for example, D1) calculated in each of the plurality of client terminals C1 to C3 by the calculation process.

In the first integration process (integrated learning 330t), the server S integrates a plurality of first training results (421-1t, 422-1t, 423-1t) by the first training process (model training by weighting 411t to 413t) from the plurality of client terminals C1 to C3, and generates first integration information (integrated individual analysis model M21(t+1) or integrated model parameter $\theta_1^{t+1}$) regarding an integrated individual analysis model M21(t+1) obtained by integrating the individual analysis models (learning target individual analysis model M21-1t, M22-1t, M23-1t) of the plurality of client terminals C1 to C3.

[2] In the federated learning system 100 of [1] described above, in the first integration process (integrated learning 330t), the server S transmits the first integration information (integrated individual analysis model M21(t+1) or integrated model parameter $\theta_1^{t+1}$) to each of the plurality of client terminals C1 to C3 until the first end condition is satisfied.

In the first training process (model training by weighting 411t to 413t), each of the plurality of client terminals C1 to C3 updates the individual analysis model (learning target individual analysis model M21-1t, M22-1t, M23-1t) with the first integration information (integrated individual analysis model M21(t+1) or integrated model parameter $\theta_1^{t+1}$), and trains the updated individual analysis model (learning target individual analysis model M21-1t, M22-1t, M23-1t) on the basis of the first explanatory variable 203, the first objective variable 204, and the specific similarity (prediction probability $[p_{ji}^1]^t$).

[3] In the federated learning system 100 of [1] described above, in the first integration process (integrated learning 330t), in a case where the first end condition is satisfied, the server S transmits the first integration information (integrated individual analysis model M21(t+1) or integrated model parameter $\theta_1^{t+1}$) to a specific client terminal having the specific learning data set.

[4] In the federated learning system 100 of [1] described above, in the calculation process (learning weight calculation 401 to 403), each of the plurality of client terminals C1 to C3 inputs, to the similarity calculation model (learning target similarity calculation models M11t to M13t), a combination of the first explanatory variable 203 and the first objective variable 204 of the data sample i as a second explanatory variable 301 to calculate the similarity (prediction probability $[p_{ji}^{k}]$t).

[5] In the federated learning system 100 of [1] described above, in the calculation process (learning weight calculation 401 to 403), each of the plurality of client terminals C1 to C3 calculates a learning weight ($w_1^1$, $w_2^1$, $w_3^1$) corresponding to the specific similarity (prediction probability $[p_{ji}^1]$t).

In the first training process (model training by weighting 411t to 413t), each of the plurality of client terminals C1 to C3 trains the individual analysis model (learning target individual analysis model M21-1t, M22-1t, M23-1t) on the basis of the individual analysis model (learning target individual analysis model M21-1t, M22-1t, M23-1t), the first explanatory variable 203, the first objective variable 204, and the learning weight ($w_1^1$, $w_2^1$, $w_3^1$) corresponding to the specific similarity (prediction probability $[p_{ji}^1]$t) calculated in each of the plurality of client terminals C1 to C3 by the calculation process (learning weight calculation 401 to 403).

[6] Prior to the first federated learning process (FL2), the federated learning system 100 of [1] executes a second federated learning process (FL1) which repeats a second training process (model training 311t to 313t) by each of the plurality of client terminals C1 to C3 and a second integration process (integrated learning 330t) by the server S until a second end condition is satisfied.

In the second training process (model training 311t to 313t), each of the plurality of client terminals C1 to C3 trains the learning target similarity calculation models M11t to M13t with a combination of the first explanatory variable 203 and the first objective variable 204 as a second explanatory variable 301 and the client ID 201 as a second objective variable 302.

In the second integration process (integrated learning 330t), the server S integrates second training results 321t to 323t of the learning target similarity calculation models M11t to M13t from the plurality of client terminals C1 to C3 by the second training process (model training 311t to 313t), and generates second integration information (the integrated similarity calculation model M1(t+1) or the integrated model parameter $\varphi^{t+1}$ thereof) regarding an integrated similarity calculation model M1(t+1) obtained by integrating the learning target similarity calculation models M11t to M13t of the plurality of client terminals C1 to C3.

[7] In the federated learning system 100 of [6] described above, in the second integration process (integrated learning 330t), the server S transmits the second integration information (the integrated similarity calculation model M1(t+1) or the integrated model parameter $\varphi^{t+1}$ thereof) to each of the plurality of client terminals C1 to C3.

In the second training process (model training 311t to 313t), each of the plurality of client terminals C1 to C3 updates the learning target similarity calculation models M11t to M13t with the second integration information (the integrated similarity calculation model M1(t+1) or the integrated model parameter $\varphi^{t+1}$ thereof), and trains the updated learning target similarity calculation models M11t to M13t on the basis of the second explanatory variable 301 and the second objective variable 302.

[8] In the federated learning system 100 of [6] described above, in the second training process (model training 311t to 313t), in a case where the second end condition is satisfied, each of the plurality of client terminals C1 to C3 sets the updated learning target similarity calculation models M11t to M13t as the similarity calculation model M1.

[9] In the federated learning system 100 of [3] described above, the server S outputs the first integration information (integration model parameter $\theta_j$) at the end of the first federated learning process (FL2) (model parameter list 1002).

[10] In the federated learning system 100 of [3] described above, the server S calculates a contribution degree 1030 indicating how much the specific learning data set D1 contributes to learning of the integrated individual analysis model M21 on the basis of the specific similarity (prediction probability $[p_{ji}^1]$) and the similarity (prediction probability $[p_{ji}^k]$).

[11] The federated learning system 100 includes a plurality of client terminals C1 to C3 each having a learning data set D1 to D3 and a server S communicable with the plurality of client terminals C1 to C3, and executes federated learning which repeats a process in which each of the plurality of client terminals C1 to C3 trains a model by using the learning data sets D1 to D3 and the server S integrates the models of the plurality of client terminals C1 to C3 by using a training result.

The learning data set Dk includes one or more data samples i including a client ID 201 that specifies the client terminal Ck, a first explanatory variable 203, and a first objective variable 204.

The federated learning system 100 executes a second federated learning process (FL1) which repeats a second training process (model training 311t to 313t) by each of the plurality of client terminals C1 to C3 and a second integration process (integrated learning 330t) by the server S until a second end condition is satisfied.

In the second training process (model training 311t to 313t), each of the plurality of client terminals C1 to C3 trains learning target similarity calculation models M11t to M13t with a combination of the first explanatory variable 203 and the first objective variable 204 as a second explanatory variable 301 and the client ID 201 as a second objective variable 302.

In the second integration process (integrated learning 330t), the server S integrates the second training results 321t to 323 t of the learning target similarity calculation models M11t to M13t from the plurality of client terminals C1 to C3 by the second training process (model training 311t to 313t), and generates second integration information (the integrated similarity calculation model M1(t+1) or the integrated model parameter $\varphi^{t+1}$ thereof) regarding an integrated similarity calculation model M1(t+1) obtained by integrating the learning target similarity calculation models M11t to M13t of the plurality of client terminals C1 to C3.

Note that the present invention is not limited to the above-described embodiments, and includes various modifications and equivalent configurations within the spirit of the appended claims. For example, the above-described embodiments have been described in detail for easy understanding of the present invention, and the present invention is not necessarily limited to those having all the described configurations. In addition, some of the configurations of one embodiment may be replaced with the configurations of another embodiment. In addition, the configuration of one embodiment may be added with the configuration of another embodiment. In addition, addition, deletion, or replacement of other configurations may be performed on some of the configurations of each embodiment.

In addition, some or all of the above-described configurations, functions, processing units, processing means, and the like may be realized with hardware by, for example, designing with an integrated circuit, or may be realized with software by a processor interpreting and executing a program for realizing each function.

Information such as programs, tables, and files that realize each function can be stored in a recording medium such as a memory, a hard disk, and a solid state drive (SSD), or a recording medium such as an integrated circuit (IC) card, an SD card, and a digital versatile disc (DVD).

In addition, control lines and information lines are illustrated in consideration of necessity for the description, and not all control lines and information lines necessary for implementation are illustrated. In practice, it may be considered that almost all configurations are connected to each other.

**Claims**

1.   A federated learning system that includes a plurality of client terminals each having a learning data set and a server communicable with the plurality of client terminals, and executes federated learning which repeats a process in which each of the plurality of client terminals trains a model by using the learning data set and the server integrates the models of the plurality of client terminals by using a training result, wherein

the learning data set includes one or more data samples including a client ID for specifying the client terminal, a first explanatory variable, and a first objective variable,
a calculation process by each of the plurality of client terminals is executed, and a first federated learning process is executed which repeats a first training process by each of the plurality of client terminals and a first integration process by the server until a first end condition is satisfied,
in the calculation process, each of the plurality of client terminals calculates similarity between the data sample and the plurality of learning data sets by inputting the data sample to a similarity calculation model for calculating similarity between the data sample and the plurality of learning data sets,
in the first training process, each of the plurality of client terminals trains an individual analysis model for calculating a predicted value of the first objective variable from the first explanatory variable on a basis of the individual analysis model, the first explanatory variable, the first objective variable, and a specific similarity with a specific learning data set calculated in each of the plurality of client terminals by the calculation process, and
in the first integration process, the server integrates a plurality of first training results by the first training process from the plurality of client terminals, and generates first integration information regarding an integrated individual analysis model obtained by integrating the individual analysis models of the plurality of client terminals.

2.   The federated learning system according to claim 1, wherein

in the first integration process, the server transmits the first integration information to each of the plurality of client terminals until the first end condition is satisfied,
in the first training process, each of the plurality of client terminals updates the individual analysis model with the first integration information, and trains the updated individual analysis model on a basis of the first explanatory variable, the first objective variable, and the specific similarity.

3.   The federated learning system according to claim 1, wherein
in the first integration process, in a case where the first end condition is satisfied, the server transmits the first integration information to a specific client terminal having the specific learning data set.

4.   The federated learning system according to claim 1, wherein

in the calculation process, each of the plurality of client terminals inputs, to the similarity calculation model, a combination of the first objective variable and the first explanatory variable of the data sample as a second explanatory variable to calculate the similarity.

5. The federated learning system according to claim 1, wherein

   in the calculation process, each of the plurality of client terminals calculates a learning weight corresponding to the specific similarity, and
   in the first training process, each of the plurality of client terminals trains the individual analysis model on a basis of the individual analysis model, the first explanatory variable, the first objective variable, and the learning weight corresponding to the specific similarity calculated in each of the plurality of client terminals by the calculation process.

6. The federated learning system according to claim 1, wherein

   prior to the first federated learning process, a second federated learning process is executed which repeats a second training process by each of the plurality of client terminals and a second integration process by the server until a second end condition is satisfied,
   in the second training process, each of the plurality of client terminals trains a learning target similarity calculation model with a combination of the first explanatory variable and the first objective variable as a second explanatory variable and the client ID as a second objective variable, and
   in the second integration process, the server integrates second training results of the learning target similarity calculation models from the plurality of client terminals by the second training process, and generates second integration information regarding an integrated similarity calculation model obtained by integrating the similarity calculation models of the plurality of client terminals.

7. The federated learning system according to claim 6, wherein

   in the second integration process, the server transmits the second integration information to each of the plurality of client terminals, and
   in the second training process, each of the plurality of client terminals updates the learning target similarity calculation model with the second integration information, and trains the updated learning target similarity calculation model on a basis of the second explanatory variable and the second objective variable.

8. The federated learning system according to claim 6, wherein
   in the second training process, in a case where the second end condition is satisfied, each of the plurality of client terminals sets the updated learning target integrated similarity calculation model as the similarity calculation model.

9. The federated learning system according to claim 3, wherein
   the server outputs the first integration information at end of the first federated learning process.

10. The federated learning system according to claim 3, wherein
    the server calculates a contribution degree indicating how much the specific learning data set contributes to learning of the integrated individual analysis model on a basis of the specific similarity and the similarity.

11. A federated learning system that includes a plurality of client terminals each having a learning data set and a server communicable with the plurality of client terminals, and executes federated learning which repeats a process in which each of the plurality of client terminals trains a model by using the learning data set and the server integrates the models of the plurality of client terminals by using a training result, wherein

    the learning data set includes one or more data samples including a client ID for specifying the client terminal, a first explanatory variable, and a first objective variable,
    a second federated learning process is executed which repeats a second training process by each of the plurality of client terminals and a second integration process by the server until a second end condition is satisfied,
    in the second training process, each of the plurality of client terminals trains a learning target similarity calculation model with a combination of the first explanatory variable and the first objective variable as a first explanatory variable and the client ID as a second objective variable, and
    in the second integration process, the server integrates second training results of the learning target similarity calculation models from the plurality of client terminals by the second training process, and generates second integration information regarding an integrated similarity calculation model obtained by integrating the learning target similarity calculation models of the plurality of client terminals.

12. A federated learning method in which a federated learning system which includes a plurality of client terminals each having a learning data set and a server communicable with the plurality of client terminals and executes federated learning which repeats a process in which each of the plurality of client terminals trains a model by using the learning data set and the server integrates the models of the plurality of client terminals by using a training result, wherein

the learning data set includes one or more data samples including a client ID for specifying the client terminal, a first explanatory variable, and a first objective variable,

a calculation process by each of the plurality of client terminals is executed, and a first federated learning process is executed which repeats a first training process by each of the plurality of client terminals and a first integration process by the server until a first end condition is satisfied,

in the calculation process, each of the plurality of client terminals calculates similarity between the data sample and the plurality of learning data sets by inputting the data sample to a similarity calculation model for calculating similarity between the data sample and the plurality of learning data sets,

in the first training process, each of the plurality of client terminals trains an individual analysis model for calculating a predicted value of the first objective variable from the first explanatory variable on a basis of the individual analysis model, the first explanatory variable, the first objective variable, and a specific similarity with a specific learning data set calculated in each of the plurality of client terminals by the calculation process, and

in the first integration process, the server integrates a plurality of first training results by the first training process from the plurality of client terminals, and generates first integration information regarding an integrated individual analysis model obtained by integrating the individual analysis models of the plurality of client terminals.

13. A federated learning program causing a processor of a client terminal in a federated learning system that includes a plurality of client terminals each having a learning data set and a server communicable with the plurality of client terminals, and executes federated learning which repeats a process in which each of the plurality of client terminals trains a model by using the learning data set and the server integrates the models of the plurality of client terminals by using a training result, wherein

the learning data set includes one or more data samples including a client ID for specifying the client terminal, a first explanatory variable, and a first objective variable, the federated learning program causing the processor to execute:

a calculation process of calculating similarity between the data sample and the plurality of learning data sets by inputting the data sample to a similarity calculation model for calculating similarity between the data sample and the plurality of learning data sets; and

a first training process of training an individual analysis model for calculating a predicted value of the first objective variable from the first explanatory variable on a basis of the individual analysis model, the first explanatory variable, the first objective variable, and a specific similarity with a specific learning data set calculated in each of the plurality of client terminals by the calculation process, wherein

the server integrates a plurality of first training results by the first training process from the plurality of client terminals, and when first integration information regarding an integrated individual analysis model obtained by integrating the individual analysis models of the plurality of client terminals is received from the server, the individual analysis model is updated with the first integration information, and the calculation process and the first training process are caused to be executed repeatedly.

*FIG. 1*

## FIG. 2

| CLIENT ID | DATA ID | EXPLANATORY VARIABLE X | | | OBJECTIVE VARIABLE y (PRESENCE OR ABSENCE OF DISEASE) |
|---|---|---|---|---|---|
| | | x1 | x2 | ... | |
| C1 | D11 | 0.3 | 0.2 | ... | 1 |
| C1 | D12 | 0.1 | 0.9 | ... | 0 |
| C1 | D13 | 0.4 | -0.3 | ... | ... |
| ... | ... | ... | ... | ... | ... |
| C1 | ... | ... | ... | ... | ... |

| CLIENT ID | DATA ID | EXPLANATORY VARIABLE X | | | OBJECTIVE VARIABLE y (PRESENCE OR ABSENCE OF DISEASE) |
|---|---|---|---|---|---|
| | | x1 | x2 | ... | |
| C2 | D21 | 0.7 | 0.6 | ... | 1 |
| C2 | D22 | 0.4 | 0.5 | ... | 1 |
| C2 | D23 | 0.1 | 0.9 | ... | ... |
| ... | ... | ... | ... | ... | ... |
| C2 | ... | ... | ... | ... | ... |

| CLIENT ID | DATA ID | EXPLANATORY VARIABLE X | | | OBJECTIVE VARIABLE y (PRESENCE OR ABSENCE OF DISEASE) |
|---|---|---|---|---|---|
| | | x1 | x2 | ... | |
| C3 | D31 | 0.2 | 0.5 | ... | 0 |
| C3 | D32 | 0.8 | 0.1 | ... | 0 |
| C3 | D33 | 0.7 | 0.3 | ... | ... |
| ... | ... | ... | ... | ... | ... |
| C3 | ... | ... | ... | ... | ... |

201  202  203  204

EP 4 535 246 A1

# FIG. 3

OBJECTIVE VARIABLE 302 | EXPLANATORY VARIABLE 301

FEDERATED LEARNING FL1 OF SIMILARITY CALCULATION MODELS

FIG. 4

FEDERATED LEARNING FL2 OF INDIVIDUAL ANALYSIS MODELS

# FIG. 5

FIG. 6

EP 4 535 246 A1

FIG. 7

FIG. 8

EP 4 535 246 A1

## FIG. 9

S ~ SERVER    Ck(Cj) ~ CLIENT TERMINAL

S901 ~ CLIENT ID

S902 ~ **FEDERATED LEARNING FL1 OF SIMILARITY CALCULATION MODELS**

S921 ~ SIMILARITY CALCULATION MODEL INFORMATION

S922 ~ LEARNING TARGET SIMILARITY CALCULATION MODEL TRAINING

S923 ~ UPDATE RESULT

S924 ~ INTEGRATED LEARNING OF SIMILARITY CALCULATION MODELS

S925 ~ Break [DATA SIMILARITY CALCULATION MODEL TRAINING END]

S926 ~ UPDATED SIMILARITY CALCULATION MODEL INFORMATION

S903 ~ **FEDERATED LEARNING FL2 OF INDIVIDUAL ANALYSIS MODELS**

S930 ~ CALCULATE LEARNING WEIGHT

S931 ~ INDIVIDUAL ANALYSIS MODEL INFORMATION

S932 ~ MODEL TRAINING BY WEIGHTING

S933 ~ INDIVIDUAL ANALYSIS MODEL UPDATE RESULT

S934 ~ INTEGRATED LEARNING OF INDIVIDUAL ANALYSIS MODELS

S935 ~ Break [INDIVIDUAL ANALYSIS MODEL TRAINING END]

S936 ~ INDIVIDUAL ANALYSIS MODEL INFORMATION

## FIG. 10

1000

EP 4 535 246 A1

| INDIVIDUAL MODEL MANAGEMENT SCREEN | SIMILARITY ANALYSIS MODEL TRAINING | INDIVIDUAL ANALYSIS MODEL TRAINING |

### TRAINED MODEL INFORMATION DISPLAY SCREEN

201 / 1001

| CLIENT ID | INDIVIDUAL ANALYSIS MODEL ID |
|-----------|------------------------------|
| ▶ C1 | M21 |
| C2 | M22 |
| C3 | M23 |
| ... | ... |

1002

| MODEL PARAMETER | VALUE |
|-----------------|-------|
| $\theta 1$ | 0.1 |
| $\theta 2$ | 0.2 |
| $\theta 3$ | -0.5 |
| ... | ... |

201 / 1003  1030

| CLIENT ID | CONTRIBUTION DEGREE |
|-----------|---------------------|
| C1 | 57% |
| C2 | 20% |
| C3 | 10% |
| ... | ... |

| SIMILARITY ANALYSIS MODEL SELECTION | INDIVIDUAL ANALYSIS MODEL SELECTION |

# FIG. 11

INDIVIDUAL MODEL INFORMATION DISPLAY SCREEN                    CLIENT ID: C1

| CLIENT ID | CONTRIBUTION DEGREE |
|-----------|---------------------|
| C1 | 57% |
| C2 | 20% |
| C3 | 10% |
| ... | ... |

| DATA ID | EXPLANATORY VARIABLE X | | | OBJECTIVE VARIABLE y |
|---------|------|------|------|------|
| | x1 | x2 | ... | y |
| D11 | 0.3 | 0.2 | | 1 |

SIMILARITY WITH CLIENT C1 (PREDICTION PROBABILITY)

$[p_{11}^{k}]$

○ : 1.0
∘ : 0.5
● : 0.3

# FIG. 12

## INTERNATIONAL SEARCH REPORT

| International application No. |
|---|
| **PCT/JP2023/001789** |

**A. CLASSIFICATION OF SUBJECT MATTER**

**G06N 20/00**(2019.01)i
FI: G06N20/00

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-524662 A (NTERNATIONAL BUSINESS MACHINES CORPORATION) 09 May 2022 (2022-05-09)<br>entire text, all drawings | 1-13 |
| A | JP 2021-149370 A (SECOM CO LTD) 27 September 2021 (2021-09-27)<br>entire text, all drawings | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/001789**

| Patent document cited in search report | | | Publication date (day/month/year) | Patent family member(s) | | | Publication date (day/month/year) |
|---|---|---|---|---|---|---|---|
| JP | 2022-524662 | A | 09 May 2022 | US | 2021/0034985 | A1 | |
| | | | | entire text, all drawings | | | |
| | | | | WO | 2020/194077 | A1 | |
| | | | | CN | 113614738 | A | |
| JP | 2021-149370 | A | 27 September 2021 | (Family: none) | | | |

Form PCT/ISA/210 (patent family annex) (January 2015)

**REFERENCES CITED IN THE DESCRIPTION**

**Patent documents cited in the description**

- JP 2022090195 A

- WO 2020229684 A